# EUROPEAN PATENT APPLICATION

(11) **EP 3 056 723 A1**
(43) Date of publication of application: **17.08.2016**
(21) Application number: 16154194.1
(22) Date of filing: 04.02.2016
(51) Int. Cl.: F02M 35/12, F16L 11/11

(54) **INTAKE NOISE REDUCING APPARATUS FOR INTERNAL COMBUSTION ENGINE**

(30) Priority: 10.02.2015 JP 2015024644
(71) Applicant: MAHLE Filter Systems Japan Corporation, Tokyo 170-0004 (JP)
(72) Inventor: KATO, Yuichi, Toshima-ku, Tokyo 170-0004 (JP); WATANABE, Junichi, Toshima-ku, Tokyo 170-0004 (JP)
(74) Representative: Grünecker Patent- und Rechtsanwälte PartG mbB

(57) **Abstract**

[Object] To enhance an intake-noise reducing effect by greatly securing an axial amplitude of an elastic member 14 for intake-air pulsation.

[Solution] An intake noise reducing apparatus connected to an intake system of an internal combustion engine includes a bellows-shaped elastic member 14 connected through a communicating tube to an Intake passage. An intake-noise reducing effect associated with an expansion-and-contraction deformation of the elastic member 14 can be obtained in addition to an intake-noise reducing effect obtainable as a Helmholtz-type resonator element. A peripheral wall 14c of the elastic member 14 includes a mountain portion 31 and a valley portion 32 connected through a taper wall 33 to each other. A crest portion of each of the mountain portion 31 and the valley portion 32 is a straight-line portion 35, 36. The straight-line portion 35, 36 is in a cylindrical shape, and hence suppresses a radial displacement which is caused by a change in sound pressure, so that the axial amplitude can be secured by that much.

## Description

### TECHNICAL FIELD

The present invention relates to an intake noise reducing apparatus that reduces intake noise of an internal combustion engine, and more particularly to an intake noise reducing apparatus formed with a bellows-shaped chamber that can elastically deform.

### BACKGROUND ART

Patent Literature 1 discloses an intake noise reducing apparatus for an internal combustion engine, which was previously proposed by an applicant of the present application. This intake noise reducing apparatus separately forms a chamber by use of a bellows-shaped elastic member which can elastically deform. This chamber is connected to an intake passage of the internal combustion engine through a connecting tube which constitutes a neck tube of a Helmholtz-type resonator element. The elastic member is accommodated in an inner space of a cylindrical case which is exposed to ambient air.

### CITATION LIST

### Patent Literature

[Patent Literature 1] Japanese Patent Application Publication No. 2013-124599

### SUMMARY OF THE INVENTION

### PROBLEM TO BE SOLVED

In the case of the above-mentioned intake noise reducing apparatus, an intake noise in a specific frequency range is reduced as an effect of the Helmholtz-type resonator element constructed by connecting the chamber through the neck tube to the intake passage. In addition, an intake noise in a second specific frequency range is also reduced because the bellows-shaped elastic member expands and contracts to reduce sound pressure energy in response to an intake-air pulsation.

Conventionally, as the bellows-shaped elastic member, a mountain portion and a valley portion each of which is in a simple V-shape in cross section have been used. However, according to further research by the applicant of the present application, such a general bellows-shaped elastic member having the V-shape in cross section is displaced slightly in a radial direction in addition to its displacement in an axial direction, in response to the intake-air pulsation. Accordingly, it was found that an axial amplitude of the bellows-shaped elastic member is reduced so that an intake-noise reducing effect of the expansion-and-contraction deformation is not obtained to a maximum extent. That is, there is room for improvement on the intake-noise reducing effect.

### SOLUTION TO PROBLEM

According to the present invention, there is provided an intake noise reducing apparatus for an internal combustion engine, comprising: an elastic member being in a substantially cylindrical shape and including a base end which is open, a tip which is closed, and a peripheral wall which is bent in a bellows shape; a base plate holding the base end of the elastic member; and a communicating tube including one end connected with the base plate such that a chamber formed in the elastic member communicates with an intake passage of the internal combustion engine, wherein the bellows-shaped peripheral wall of the elastic member includes a plurality of high rigidity portions whose radial rigidities are locally strengthened, and the plurality of high rigidity portions are located axially away from each other.

For example, each of the high rigidity portions is formed by providing a straight-line portion parallel to an axial direction of the elastic member, at a crest portion of at least one of a mountain portion and a valley portion of the bellows-shaped peripheral wall.

Thus, the plurality of high rigidity portions are provided away from each other in the axial direction. Hence, a radial displacement of the elastic member which is caused by the intake-air pulsation introduced into the chamber of the elastic member is suppressed. Hence, an axial amplitude of the elastic member which is caused by the intake-air pulsation is increased so that sound pressure energy is converted into kinetic energy of the elastic member more effectively. Therefore, the intake-noise reducing effect of the expansion-and-contraction deformation of the elastic member can be obtained more effectively.

### EFFECTS OF INVENTION

According to the present invention, intake noise in a specific frequency range is reduced as the Helmholtz-type resonator element. Moreover, the intake-noise reducing effect in a second specific frequency range can also be obtained by the expansion-and-contraction deformation of the bellows-shaped elastic member. In particular, the intake-noise reducing effect in the second specific frequency range is more effective because the radial displacement of the bellows-shaped elastic member is suppressed.

### BRIEF EXPLANATION OF DRAWINGS

[FIG. 1] An oblique perspective view illustrating an intake system for an internal combustion engine, which includes an intake noise reducing apparatus according to the present invention.
[FIG. 2] An oblique perspective view illustrating the intake noise reducing apparatus in the state where a part of a case is cut.
[FIG. 3] An oblique perspective view of an elastic member.
[FIG. 4] A half sectional view of the elastic member.
[FIG. 5] An enlarged sectional view of main part of the elastic member.
[FIG. 6] A characteristic view illustrating an axial amplitude of the elastic member associated with intake-air pulsation in an embodiment, as compared with that in a comparative example.
[FIG. 7] An enlarged sectional view illustrating a main part of an elastic member in the comparative example.
[FIG. 8] A characteristic view illustrating an intake-noise reducing effect of the intake noise reducing apparatus in the embodiment.
[FIG. 9] A characteristic view illustrating an intake-noise reducing effect of the intake noise reducing apparatus in the embodiment in another frequency range.
[FIG. 10] An enlarged sectional view illustrating a main part of an elastic member in a second embodiment.
[FIG. 11] An enlarged sectional view illustrating a main part of an elastic member in a third embodiment.

### DETAILED DESCRIPTION OF INVENTION

Hereinafter, an embodiment according to the present invention will be explained in detail referring to the drawings.

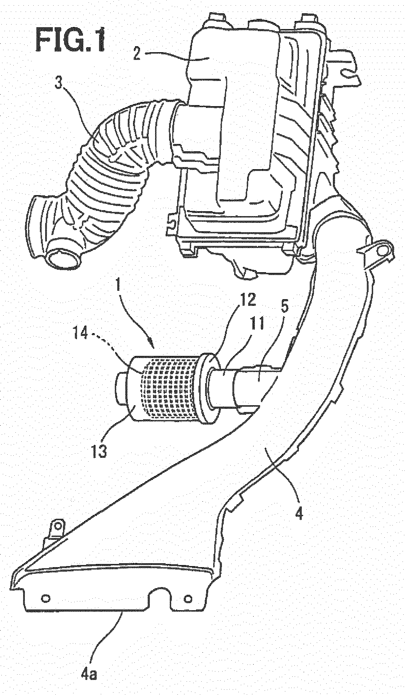

FIG. 1 shows an intake system of an internal combustion engine for a vehicle (automobile), which includes an intake noise reducing apparatus 1 according to the present invention. An air cleaner 2 includes an air cleaner element therein. A downstream side of the air cleaner element, i.e. a so-called clean side of the air cleaner 2 is connected through a flexible intake duct 3 to the internal combustion engine (not shown). An upstream side of the air cleaner element, i.e. a so-called dust side of the air cleaner 2 Is connected with an air introduction duct 4. The air introduction duct 4 is formed by rigid synthetic-resin mold products. A tip of the air introduction duct 4 Is open as an air introducing port 4a. An outside air taken from the air introducing port 4a passes through the air cleaner 2, and then is introduced through the intake duct 3 into the internal combustion engine.

The air introduction duct 4 constitutes a part of an intake passage ranging from the air introducing port 4a to the internal combustion engine. In this embodiment, the intake noise reducing apparatus 1 is connected with a lateral surface of the air introduction duct 4. The intake noise reducing apparatus 1 is provided for reducing an intake noise (such as a pulsation noise associated with pulsation of intake air and a flow noise associated with flow of intake air) which leaks from the air introducing port 4a to an outside. More specifically, a branch pipe 5 is formed such that the branch pipe 5 branches off from (i.e. arises from) the air introduction duct 4 formed of synthetic resin. The branch pipe 5 extends in a direction substantially perpendicular to a mainstream of intake air. The intake noise reducing apparatus 1 is connected with the branch pipe 5.

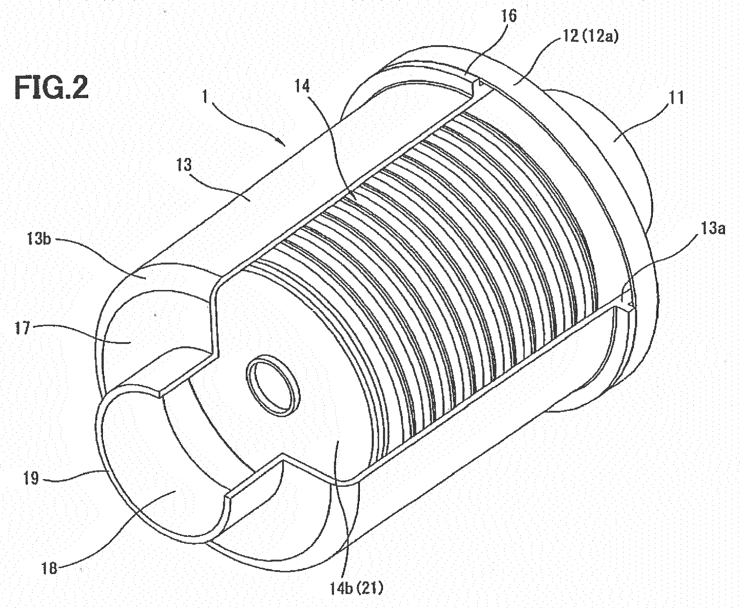

Also as shown in FIG. 2, the intake noise reducing apparatus 1 mainly includes a base plate 12, a case 13 and an elastic member 14. The base plate 12 is formed in a circular shape (more specifically, in an annular shape). The base plate 12 includes a communicating tube 11 located at a center portion of the base plate 12. The communicating tube 11 is fitted into the branch pipe 5 and thereby connected with the branch pipe 5. The case 13 is formed in a cylindrical shape. One end 13a of the case 13 is fitted into the base plate 12. The elastic member 14 is formed in a bellows shape (accordion shape), and is accommodated in the case 13.

For example, the base plate 12 is formed integrally with the communicating tube 11 by means of molding of rigid synthetic resin. The base plate 12 includes an outer circumferential edge portion 12a that protrudes in an axial direction. The one end 13a of the case 13 is fitted into a radially inner surface of the outer circumferential edge portion 12a. The communicating tube 11 cooperates with the branch pipe 5 to define a neck tube of a so-called Helmholtz-type resonator element. A tube length and a bore diameter of a combination of the communicating tube 11 and the branch pipe 5 are set so as to correspond to a desired resonance frequency.

For example, the case 13 is a rigid synthetic-resin mold product. The case 13 includes a flange portion 16 and an end-portion wall 17. The flange portion 16 is formed in an annular shape at a location near the one end 13a which is fitted into the outer circumferential edge portion 12a of the base plate 12. The flange portion 16 conducts a positioning by becoming axially in contact with the outer circumferential edge portion 12a. The end-portion wall 17 is located at another end 13b of the case 13. The end-portion wall 17 extends along a plane perpendicular to the axial direction of the case 13, and is located at an outer circumferential portion of the case 13. A center portion of the another end 13b is open as a circular communicating hole 18. Hence, an inside of the case 13 is exposed through the communicating hole 18 to ambient air. The communicating hole 18 is surrounded by a cylindrical portion (tubular portion) 19. The cylindrical portion 19 is formed continuously with the end-portion wall 17, and has a relatively short length. Basically, the case 13 is provided in order to protect the elastic member 14 from touching external objects. However, the case 13 does not necessarily need to be provided in the intake noise reducing apparatus according to the present invention.

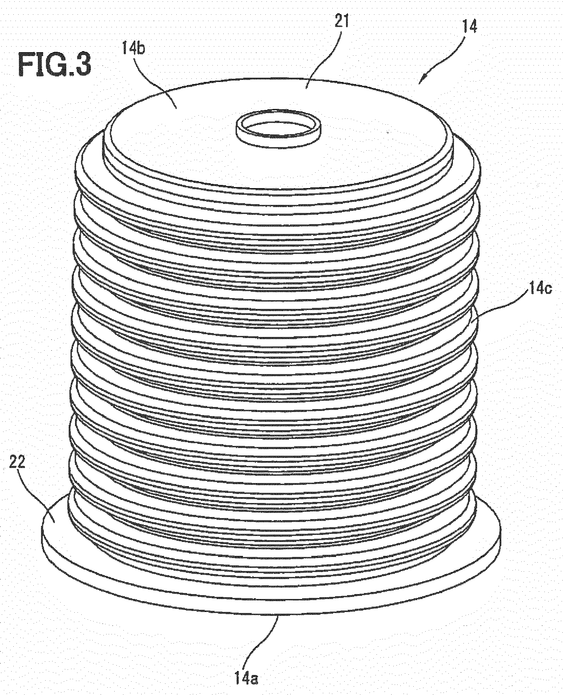

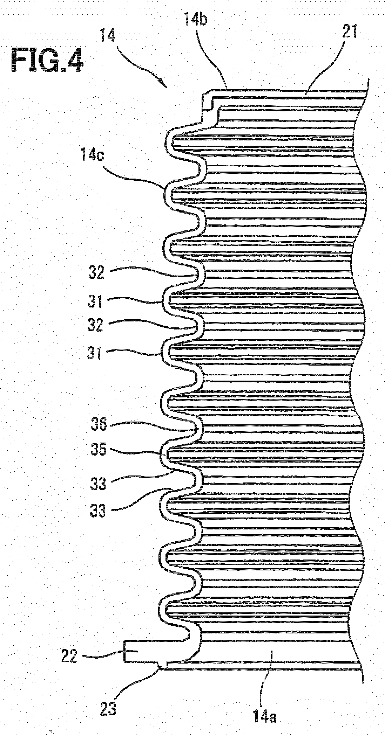

Also as shown in FIGS. 3 and 4, the elastic member 14 is substantially in a cylindrical shape, and includes a base end 14a (see FIG. 4), a tip 14b and a peripheral wall 14c. The base end 14a is open whereas the tip 14b is closed and sealed. The peripheral wall 14c is formed such that the peripheral wall 14c is bent in a bellows shape. The elastic member 14 is formed of an elastomer having a proper elasticity (such as a thermoplastic elastomer), and is integrally molded. At the tip 14b which functions as a sealing end, a circular end plate 21 which is a rigid synthetic-resin mold product is placed in order to avoid an undesired deformation of a tip-surface portion. The end plate 21 is attached integrally to the elastic member 14 by means of so-called insert molding when molding the elastic member 14.

At the base end 14a which functions as an opening end, an annular mounting flange 22 is formed to be relatively thick. The mounting flange 22 has an outer diameter which enables the mounting flange 22 to be fitted closely into an inside of the outer circumferential edge portion 12a of the base plate 12. The mounting flange 22 is sandwiched and held between the base plate 12 and the one end 13a of the case 13, and thereby the elastic member 14 is held and fixed to the base plate 12. A sealing protrusion 23 is formed on a contact surface of the mounting flange 22 on which the base plate 12 abuts.

In the state where the elastic member 14 has been attached to the base plate 12, a chamber 24 formed in the elastic member 14 is a space enclosed and separated from a space formed in the case 13. In this state, the chamber 24 communicates with an intake passage of the air introduction duct 4 through the communicating tube 11 of the base plate 12.

An outer diameter of the peripheral wall 14c of the elastic member 14 is set to be slightly smaller than an inner diameter of the case 13. The tip 14b of the elastic member 14 Is located properly away from the end-portion wall 17 of the case 13. Therefore, in the state where the base end 14a has been fixed to the base plate 12, the elastic member 14 can freely expand and contract in the case 13 by causing the tip 14b to function as a free end.

As a basic operation of the intake noise reducing apparatus 1 as constructed above, the so-called Helmholtz-type resonator element is realized. The chamber 24 set to have a proper volume is connected (communicated) with the intake passage of the internal combustion engine through the communicating tube 11 and the branch pipe 5 which function as the neck tube of the Helmholtz-type resonator element. Therefore, the intake noise is reduced in a specific frequency range. It is noted that the volume of the chamber 24 or the like is adjusted such that a reducing effect of the intake noise can be obtained in a desired frequency band.

At the same time, the intake-air pulsation is introduced into the chamber 24. As a result, the shape of the elastic member 14 is changed such that the elastic member 14 expands and contracts in the axial direction. Thus, a sound pressure energy is converted into a kinetic energy of the elastic member 14. Hence, the reducing effect of the intake noise can be obtained in a second specific frequency range. This second specific frequency range can be set at a desired frequency range by setting a spring constant of the elastic member 14 and a weight of the elastic member 14 or the like. It is noted that, although the frequency range of the Helmholtz-type resonator element may overlap with the second frequency range, the intake noise can be reduced over a wider range by suitably setting the frequency range of the Helmholtz-type resonator element and the second frequency range.

Next, a structure of the peripheral wall 14c of the elastic member 14 which is a major part according to the present invention will now be explained in more detail.

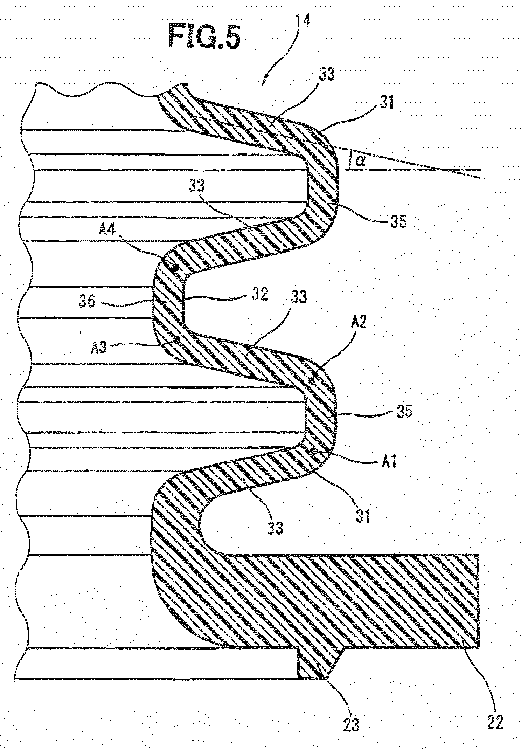

As shown in FIG. 4, in this embodiment, the peripheral wall 14c is formed in a bellows shape such that mountain portions (hill portions) 31 and valley portions (trough portions) 32 are alternately formed between the mounting flange 22 and the end plate 21. The number of the mountain portions 31 is "n" (for example, 10) whereas the number of the valley portions 32 is "n-1" (for example, 9). The n mountain portions 31 have longitudinally-cross-sectional shapes identical with one another. The (n-1) valley portions 32 have longitudinally-cross-sectional shapes identical with one another. As shown in an enlarged view of FIG. 5, the mountain portion 31 and the valley portion 32 which are adjacent to each other are connected to each other through a taper wall 33. The taper wall 33 is inclined relative to an axis (center line) of the elastic member 14. As shown in FIG. 5, each taper wall 33 extends in a straight-line shape In longitudinally-cross section. The elastic member 14 has a rotator shape as obtained by rotating a longitudinally-cross-sectional shape shown in FIGS. 4 and 5 about the axis. Hence, in detail, the taper wall 33 is an annular conical surface which is small in width. Each mountain portion 31 is connected with one pair of taper walls 33 which exist on upper and lower sides of the mountain portion 31. These two taper walls 33 have shapes symmetrical to each other with respect to the mountain portion 31.

A crest portion of each mountain portion 31 is formed as a straight-line portion 35 parallel to the axis (center line) of the elastic member 14. In the same manner, a crest portion of each valley portion 32 is formed as a straight-line portion 36 parallel to the axis (center line) of the elastic member 14. That is, as shown in FIG. 5, each mountain portion 31 is bent at two points of a point A1 and a point A2 in longitudinally-cross section. Each mountain portion 31 cooperates with both the adjacent taper walls 33 to construct a trapezoidal shape in longitudinally-cross section. In the same manner, each valley portion 32 is bent at two points of a point A3 and a point A4 in longitudinally-cross section. Each valley portion 32 cooperates with both the adjacent taper walls 33 to construct a trapezoidal shape in longitudinally-cross section. As viewed in longitudinally-cross section, the trapezoidal shape of the mountain portion 31 is the same as the trapezoidal shape of the valley portion 32. It is noted that a thickness is basically constant over all portions except the mounting flange 22.

It is favorable that an inclination angle *α* (i.e. angle with respect to a plane perpendicular to the axis of the elastic member 14) of each taper wall 33 is relatively small in order to facilitate axial deformation and vibration of the elastic member 14. For example, it is favorable that the inclination angle *α* is smaller than or equal to 25 degrees.

In this embodiment, each of the straight-line portion 35 of the mountain portion 31 and the straight-line portion 36 of the valley portion 32 is short in length, but forms a cylindrical shape as viewed in three dimensions. Hence, each of the straight-line portion 35 and the straight-line portion 36 is difficult to change in shape in a radial direction. That is, the straight-line portions 35 and the straight-line portions 36 are high rigidity portions each of which has a high rigidity in the radial direction. When an internal pressure of the chamber 24 changes, the taper walls 33 each of which connects the straight-line portion 35 of the mountain portion 31 with the straight-line portion 36 of the valley portion 32 swing about the bending points A1 to A4. Hence, basically, the elastic member 14 expands and contracts only in the axial direction. As a result, an amplitude in the axial direction can be largely secured for the intake-air pulsation, so that a more effective reducing effect of the intake noise can be obtained. In other words, the plurality of high rigidity portions exist annularly and are away from one another in the axial direction such that the taper walls 33 which are capable of swing deformation connect these high rigidity portions with each other. Accordingly, a free deformation (i.e. change in shape) in the axial direction is permitted while suppressing a displacement in the radial direction. Therefore, a larger amplitude can be obtained against a change of sound pressure.

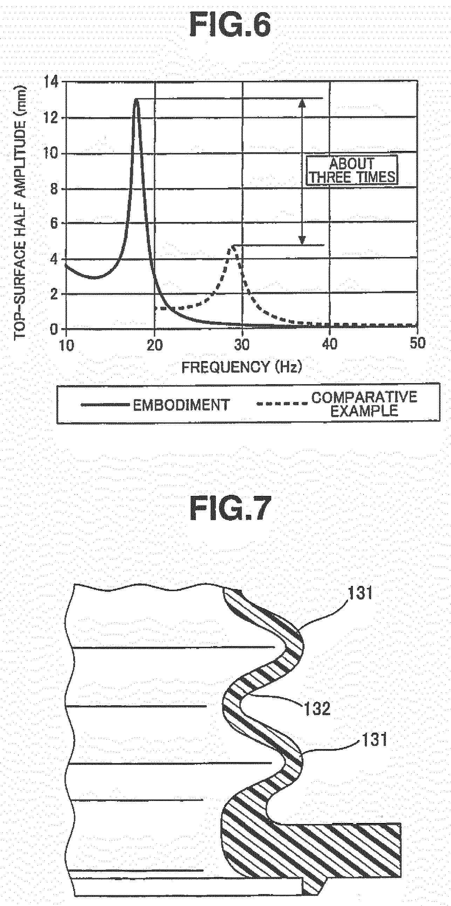

FIG. 6 is a view showing a vibration amplitude (a displacement of the end plate 21) relative to the intake-air pulsation of the elastic member 14, as compared with a comparative example. As shown in FIG. 7, an elastic member in the comparative example includes mountain portions 131 and valley portions 132 each of which is formed in a simple V-shape in longitudinally-cross section. The number of mountain portions 131, the number of valley portions 132 and a thickness of a peripheral wall, etc. in the comparative example are basically the same as those in this embodiment according to the present invention.

As shown in FIG. 6, the amplitude in this embodiment is approximately three times as large as that in the comparative example. It is noted that a frequency value having a peak of silencing effect in FIG. 6 is somewhat different between in this embodiment and in the comparative example because the shapes of the mountain portions 131 and the valley portions 132 are respectively different from the shapes of the mountain portions 31 and the valley portions 32. However, the silencing-effect result shown in FIG. 6 is basically the same as in the case that the structure has been adjusted such that the frequency value having the peak of silencing effect is constant between in this embodiment and in the comparative example.

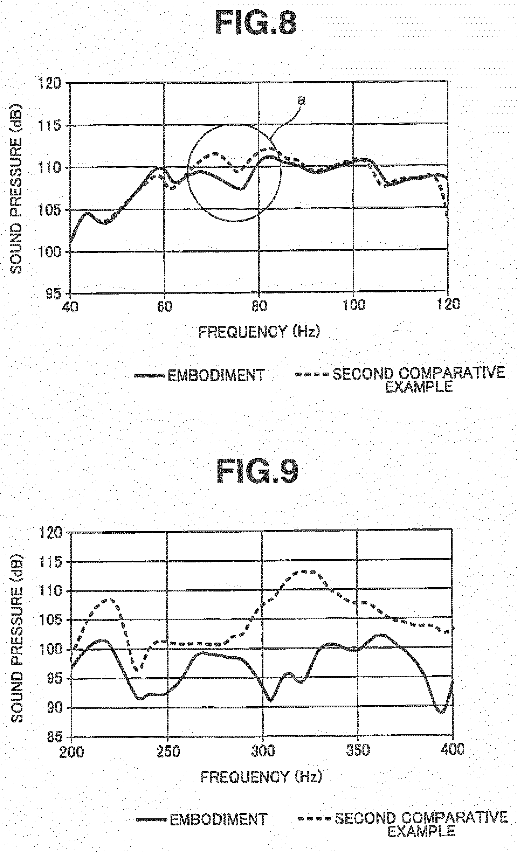

FIG. 8 is a characteristic view showing a characteristic of the intake-noise reducing effect produced by the intake noise reducing apparatus 1 which includes the elastic member 14 formed in a bellows shape and in a trapezoidal shape in longitudinally-cross section as mentioned above. In FIG. 8, the characteristic is compared with an intake noise characteristic produced in the case where the intake noise reducing apparatus 1 has been removed from the intake system shown in FIG. 1 as a "second comparative example". As shown in FIG. 8, the intake-noise reducing effect was obtained in a frequency range shown by a region "a". This is because the elastic member 14 conducts the axial expansion-and-contraction deformation as explained above. In particular, in this embodiment, the amplitude in the axial direction can be largely secured as shown in FIG. 6. Hence, sound pressure energy is effectively converted into kinetic energy so that a larger intake-noise reducing effect can be produced.

On the other hand, FIG. 9 shows the intake-noise reducing effect in a frequency range in which the intake-noise reducing effect as the Helmholtz-type resonator element can be obtained (i.e. in a relatively high frequency region as compared with FIG. 8). The "second comparative example" of FIG. 9 is the case where the intake noise reducing apparatus 1 has been removed from the intake system of FIG. 1 in the same manner as FIG. 8. As shown in FIG. 9, the intake-noise reducing effect as the Helmholtz-type resonator element is not impaired although each of the mountain portions 31 and the valley portions 32 is formed in a trapezoidal shape in cross section. Accordingly, favorable intake-noise reducing effect can be realized over a relatively wide frequency range.

In the above embodiment, both of the mountain portions 31 and the valley portions 32 include the straight-line portions 35 and 36, i.e. the high rigidity portions. However, according to the present invention, only one side of the mountain portions 31 and the valley portions 32 may include the straight-line portions 35 or 36. Moreover, according to the present invention, the trapezoidal shape of each mountain portion 31 may be designed to differ from the trapezoidal shape of each valley portion 32. Furthermore, according to the present invention, each of the plurality of mountain portions 31 (or each of the plurality of valley portions 32) does not necessarily need to be formed in an identical shape. Instead, the plurality of mountain portions 31 or the plurality of valley portions 32 may include different cross-sectional shapes.

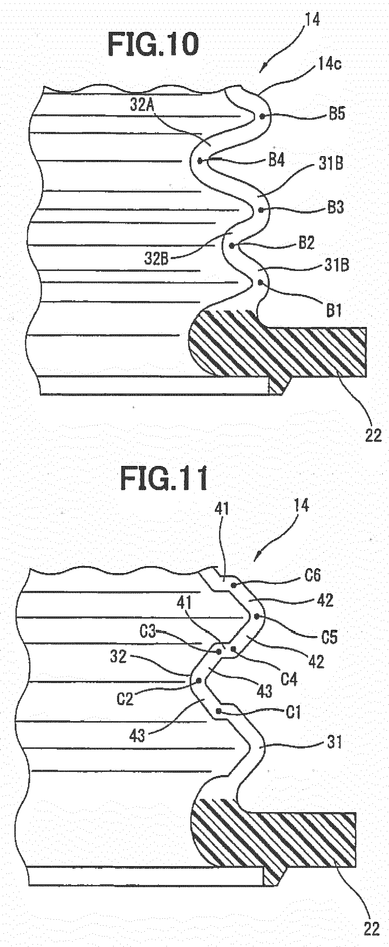

Next, FIG. 10 is a view showing an elastic member 14 in a second embodiment according to the present invention. In this second embodiment, the elastic member 14 includes a plurality of main valley portions 32A (for example, three to five main valley portions 32A) which have not-strengthened radial rigidities. Between adjacent two of the plurality of main valley portions 32A in the axial direction, two sub-mountain portions 31B and one sub-valley portion 32B are provided such that a pitch (i.e. an axial length) of each of the two sub-mountain portions 31B and the one sub-valley portion 32B is narrowed locally. Each of the main valley portions 32A, the sub-mountain portions 31A and the sub-valley portions 32B is formed in a simple V-shape in longitudinally-cross section.

That is, a peripheral wall 14c of the elastic member 14 is bent at five bending points B1 to B5 shown in FIG. 10.

A pitch between the bending point B1 which is a crest portion of the sub-mountain portion 31A and the bending point B3 which is a crest portion of the next sub-mountain portion 31A is narrower than a pitch between the bending point B3 and the bending portion B5 which sandwich the main valley portion 32A. In other words, three bending points (B1, B2, B3) at which a bending direction is changed with short pitches (lengths) are provided between adjacent two main valley portions 32A. These bending points B1, B2 and B3, i.e. the two sub-mountain portions 31A and the sub-valley portion 32B sandwiched therebetween constitute a high rigidity portion which has a radial rigidity strengthened locally. It is noted that an inner diameter of the sub-valley portion 32B is larger than an inner diameter of the main valley portion 32A as shown in FIG. 10.

Next, FIG. 11 is a view showing an elastic member 14 in a third embodiment according to the present invention. In this third embodiment, a straight-line portion 41 which substantially extends along a plane perpendicular to an axis of the elastic member 14 is provided between a mountain portion 31 and a valley portion 32 which are adjacent to each other. Each mountain portion 31 is constituted by a pair of taper walls 42 combined in a substantially V-shape. Each valley portion 32 is constituted by a pair of taper walls 43 combined in a substantially V-shape. The taper wall 42 of the mountain portion 31 is connected through the straight-line portion 41 to the taper wall 43 of the valley portion 32.

In other words, the combination of one mountain portion 31 and one valley portion 32 is given by six bending points C1 to C6 shown in longitudinally-cross section. Thus, this part bends multiple times. Hence, in particular, the straight-line portion 41 which includes the bending points C3 and C4 has a rigidity locally strengthened in the radial direction, so that a radial displacement of the elastic member 14 in response to change in sound pressure is suppressed.

Although certain embodiments according to the present invention have been explained in detail, the invention is not limited to the embodiments described above. Various modifications of the embodiments described above will occur. For example, in the above embodiments, the intake noise reducing apparatus 1 which uses the elastic member 14 is connected with the air introduction duct 4 of the intake system. However, the intake noise reducing apparatus 1 may be connected with the other part of the intake system.

### EXPLANATION OF REFERENCE SIGNS

- 1: Intake noise reducing apparatus
- 11: Communicating tube
- 12: Base plate
- 13: Case
- 14: Elastic member
- 21: End plate
- 24: Chamber
- 31: Mountain portion
- 32: Valley portion
- 33: Taper wall
- 35, 36: Straight-line portion

## Claims

1. An intake noise reducing apparatus for an internal combustion engine, comprising:
an elastic member being in a substantially cylindrical shape and including
a base end which is open,
a tip which is closed, and
a peripheral wall which is bent in a bellows shape;
a base plate holding the base end of the elastic member; and
a communicating tube including one end connected with the base plate such that a chamber formed in the elastic member communicates with an intake passage of the internal combustion engine,
wherein the bellows-shaped peripheral wall of the elastic member includes a plurality of high rigidity portions whose radial rigidities are locally strengthened, and
the plurality of high rigidity portions are located axially away from each other.

2. The intake noise reducing apparatus according to Claim 1, wherein
the bellows-shaped peripheral wall includes a straight-line portion parallel to an axial direction of the elastic member, as the high rigidity portion, and
the straight-line portion is formed at a crest portion of at least one of a mountain portion and a valley portion of the bellows-shaped peripheral wall.

3. The intake noise reducing apparatus according to Claim 2, wherein
the straight-line portion is included in a plurality of straight-line portions formed at crest portions of both of the mountain portion and the valley portion, and
each of the mountain portion and the valley portion is in a trapezoidal shape in cross section.

4. The intake noise reducing apparatus according to Claim 1, wherein
a pair of mountain portions or a pair of valley portions are formed adjacent to each other as the high rigidity portion, and
a pitch between the pair of mountain portions or the pair of valley portions is locally narrowed.
